# EUROPEAN PATENT SPECIFICATION

(11) **EP 4 231 712 B1**
(45) Date of publication and mention of the grant of the patent: **24.09.2025**
(21) Application number: 21895134.1
(22) Date of filing: 18.11.2021
(51) Int. Cl.: H04W 36/08, H04W 52/02, H04W 28/02, H04W 28/086, H04W 84/12

(54) **ELECTRONIC DEVICE AND OPERATING METHOD FOR TRANSITIONING TO A SECOND WI-FI ACCESS POINT WHEN IN SUSPEND MODE**
ELEKTRONISCHE VORRICHTUNG UND BETRIEBSVERFAHREN FÜR DEN ÜBERGANG ZU EINEM ZWEITEN WI-FI-ZUGANGSPUNKT IM SUSPEND-MODUS
DISPOSITIF ÉLECTRONIQUE ET SON PROCÉDÉ DE FONCTIONNEMENT POUR SE CONNECTER À UN SECOND POINT D'ACCÈS WI-FI EN MODE SUSPENSION

(30) Priority: 18.11.2020 KR 20200154543
(43) Date of publication of application: 23.08.2023
(73) Proprietor: Samsung Electronics Co., Ltd., Suwon-si, Gyeonggi-do 16677 (KR)
(72) Inventor: JO, Changlae, Suwon-si, Gyeonggi-do 16677 (KR); DHANUKA, Ankit, Suwon-si, Gyeonggi-do 16677 (KR); KIM, Deoknam, Suwon-si, Gyeonggi-do 16677 (KR)
(74) Representative: Walaski, Jan Filip
(86) International application number: PCT/KR2021/017009
(87) International publication number: WO 2022/108366

(56) References cited:
- KR-A- 20070 086 567
- KR-B1- 101 611 399
- US-A1- 2006 146 769
- US-A1- 2020 107 224
- US-A1- 2020 310 731
- MARATHE CHINMAY: "802.11v BSS Transition Management", WLAN FUNDAMENTALS, 27 April 2020 (2020-04-27), XP055932034, Retrieved from the Internet <URL:https://wifiwiki.wordpress.com/2020/04/27/802-11v-wireless-network-management/>
- PO-KAI HUANG (INTEL): "MLD transition", IEEE DRAFT; 11-20-0669-05-00BE-MLD-TRANSITION, IEEE-SA MENTOR, PISCATAWAY, NJ USA, vol. 802.11 EHT; 802.11be, no. 5, 9 September 2020 (2020-09-09), Piscataway, NJ USA , pages 1 - 21, XP068173006
- PO-KAI HUANG (INTEL): "CR for Wake-up Operation D5.0", INTEL CORPORATION. IEEE 802.11-19/2166R1, 7 January 2020 (2020-01-07), Piscataway, NJ USA , XP068165016

## Description

### Technical Field

Embodiments relate to an electronic device capable of accessing a wireless communication network, and an operating method thereof.

More particularly, embodiments relate to an electronic device accessing an access point (AP) to access a Wi-Fi network that is a wireless communication network, and an operating method thereof.

### Background Art

A technology is being developed, in which an electronic device and another electronic device are connected to each other through a wireless communication network and a plurality of connected electronic devices are used by interworking with each other. Here, the plurality of electronic devices connected to each other through the wireless communication network may include a display device, such as a television (TV), a smartphone, a personal computer (PC), a personal digital assistant (PDA), a remote controller, a vehicle, a refrigerator, a washing machine, and a watch. Also, the plurality of electronic devices may include a server and a server device.

A representative example of the wireless communication network includes a wireless local area network (WLAN) in which a network is constructed by using radio waves. WLAN may also be referred to as a wireless LAN, and may be used in the same sense as Wi-Fi.

For the plurality of electronic devices to be connected to each other through Wi-Fi, each of the plurality of electronic devices need to access an access point. Here, the access point is a device that transmits/receives wireless data to or from each of the plurality of electronic devices and transmits the transmitted/received wireless data to a wired network through an Ethernet port, and may also be referred to as a wired/wireless router.

For the plurality of electronic devices to seamlessly communicate with each other, the access point needs to seamlessly transmit and receive data. For example, the plurality of electronic devices may not seamlessly communicate with each other when the amount of data being transmitted/received at the access point is large or the access point is unable to be used.

Accordingly, in the above cases, there is a need for a method and apparatus for the plurality of electronic devices to seamlessly communicate with each other by using the wireless communication network.

US 2020/107224 A1 discloses a method of operating a wireless network having multi-band connectivity involving steering devices connecting to the wireless network to preferred bands.

US 2006/146769 A1 discloses a method of operating a WLAN mobile station having a first and second processor, where each processor is capable of operating in either an awake mode or a sleep mode.

### Disclosure

### Technical Problem

Embodiments provide an electronic device and an operating method thereof, wherein a plurality of electronic devices may seamlessly communicate with each other by using a wireless communication network.

More particularly, embodiments provide an electronic device and an operating method thereof, wherein, even when an electronic device accessing a wireless communication network is in a suspend mode, the electronic device may maintain a state of seamlessly communicating with another electronic device.

### Technical Solution

According to an aspect of the present invention, an electronic device is provided according to claim 1.

According to another aspect of the present invention, an operating method of an electronic device is provided according to claim 9.

### Advantageous Effects

In an electronic device and an operating method, according to embodiments, when the electronic device is accessing a Wi-Fi network by an Internet of things platform, an access point transition operation for maintaining high communication quality can be performed even when the electronic device is in a suspend mode, and thus the high communication quality may be always maintained. Accordingly, the electronic device can implement a highly reliable Internet of things environment.

### Description of Drawings

FIG. 1 is a diagram for describing an electronic device accessing a wireless communication network.
FIG. 2 is a diagram for describing an electronic device accessing a wireless communication network and in a suspend mode.
FIG. 3A is a block diagram of an electronic device according to an embodiment.
FIG. 3B is a block diagram of an electronic device according to an embodiment.
FIG. 4 is a block diagram of an electronic device according to another embodiment.
FIG. 5A is a flowchart of an operating method of an electronic device, according to an embodiment.
FIG. 5B is a flowchart of an operating method of an electronic device, according to another embodiment.
FIG. 6 is a diagram for describing an operating method of an electronic device, according to an embodiment.
FIG. 7 is a diagram for describing an operation of identifying wakeup of a processor in an operating method of an electronic device, according to an embodiment.
FIG. 8 is a diagram for describing an operating method of an electronic device, according to another embodiment.
FIG. 9 is a block diagram of an electronic device according to another embodiment.
FIG. 10 is a diagram for describing an operating method of an electronic device, according to another embodiment.
FIG. 11 is a diagram for describing transition of an access point accessed by an electronic device in a suspend mode.
FIG. 12 is a diagram for describing an example of using an electronic device, according to an embodiment.
FIG. 13 is a diagram for describing an electronic device according to an embodiment, which operates in an Internet of things environment.

### Mode for Invention

Hereinafter, embodiments of the present disclosure will be described in detail with reference to the accompanying drawings such that one of ordinary skill in the art may easily implement the present disclosure. However, the present disclosure may be implemented in various different forms and is not limited to embodiments described herein. Also, in the drawings, parts irrelevant to the description are omitted in order to clearly describe the present disclosure, and like reference numerals designate like elements throughout the specification.

Throughout the specification, when a part is "connected" to another part, the part may not only be "directly connected" to the other part, but may also be "electrically connected" to the other part with another element in between. In addition, when a part "includes" a certain element, the part may further include another element instead of excluding the other element, unless otherwise stated.

The phrases "some embodiments" or "an embodiment" appearing in various places in this specification are not necessarily all referring to the same embodiment.

Some embodiments may be represented by functional block configurations and various processing operations. Some or all of these functional blocks may be implemented by various numbers of hardware and/or software configurations that perform particular functions. For example, the functional blocks of the present disclosure may be implemented by one or more processors or microprocessors or by circuit configurations for performing an intended function. Also, for example, the functional blocks of the present disclosure may be implemented in various programming or scripting languages. The functional blocks may be implemented by algorithms executed in one or more processors. In addition, the present disclosure may employ general techniques for electronic environment setting, signal processing, and/or data processing. Terms such as modules and configurations may be widely used and are not limited to mechanical and physical configurations.

In addition, a connection line or a connection member between components shown in drawings is merely a functional connection and/or a physical or circuit connection. In an actual device, connections between components may be represented by various functional connections, physical connections, or circuit connections that are replaceable or added.

Also, the expression "at least one of A or B" indicates "A or B" or "A and B".

An electronic device according to an embodiment may be any electronic device connectable to another electronic device via a wireless communication network.

In particular, an electronic device according to an embodiment may be implemented in various forms such as a television (TV), a digital TV, a mobile phone, a tablet personal computer (PC), a digital camera, a camcorder, a laptop computer, a desktop computer, an electronic book terminal, a digital broadcasting terminal, a personal digital assistant (PDA), a portable multimedia player (PMP), a navigation device, an MP3 player, a wearable device, and a watch. Also, an electronic device according to an embodiment may be a household appliance such as a refrigerator, an air purifier, a washing machine, or a drying machine. Also, an electronic device may be a fixed electronic device arranged at a fixed location or a mobile electronic device in a portable form, and may be a digital broadcast receiver capable of receiving a digital broadcast.

Hereinafter, an electronic device according to an embodiment will be described and illustrated as an example of a display device (for example, a TV) that includes a display to visually output image data.

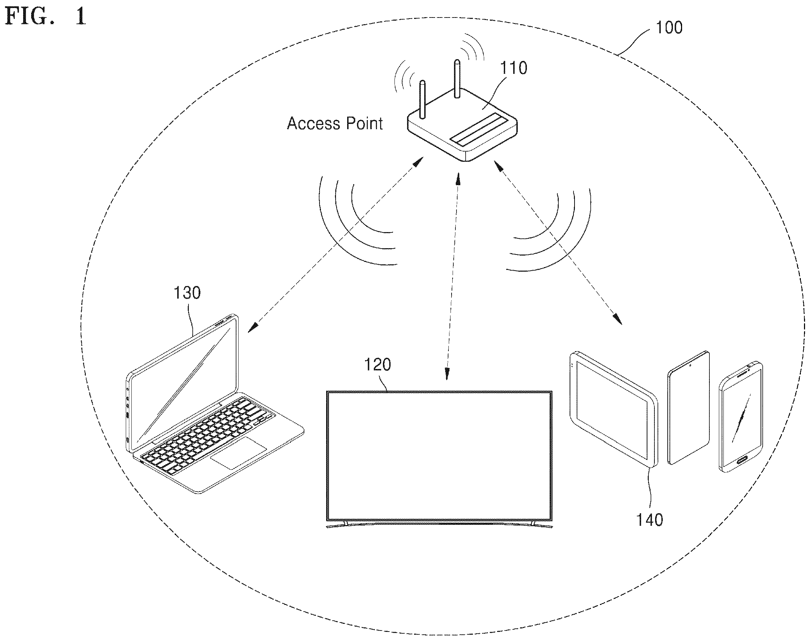

FIG. 1 is a diagram for describing an electronic device accessing a wireless communication network.

Referring to FIG. 1, the electronic device accessible to the wireless communication network may be a laptop computer 130, a TV 120, or a mobile device 140. Hereinafter, including FIG. 1, an example in which the electronic device according to an embodiment is a TV will be described.

The electronic device, the electronic device 120 may access the wireless communication network and may transmit/receive data to/from another electronic device through the wireless communication network. Here, the other electronic device connected to the electronic device 120 may include, like the electronic device described above, a mobile phone, a tablet PC, a digital camera, a camcorder, a laptop computer, a desktop computer, an electronic book terminal, a digital broadcasting terminal, a PDA, a PMP, a navigation device, an MP3 player, a wearable device, a refrigerator, a washing machine, a drying machine, or an air purifier. Also, the electronic device 120may be a fixed electronic device arranged at a fixed location or a mobile electronic device in a portable form, and may be a digital broadcast receiver capable of receiving a digital broadcast. Also, the other electronic device connected to the electronic device 120 through the wireless communication network may be a server or a server device.

The wireless communication network accessed by the electronic device 120 may be a wireless local area network (WLAN). The WLAN may also be referred to as Wi-Fi, and hereinafter, the wireless communication network will be commonly referred to as Wi-Fi for convenience of descriptions.

Referring to FIG. 1, a region 100 indicates a basic service set (BSS) that is a basic component forming a Wi-Fi network. An access point (AP) 110 is present in the region 100.

Here, the AP 110 is a device operating as a bridge between the wireless communication network and a wired communication network. In detail, the AP 110 may operate as a base station in a WLAN and connect a wired network and a wireless network to each other. For example, the AP 110 may operate as a bridge connecting the WLAN to which at least one of the electronic devices 120, 130, and 140 is connected and a mobile communication network connected to an external electronic device for example, a server (for example, an Internet of things (loT) cloud server) to each other.

In FIG. 1, the wired communication network may be a communication network for the AP 110 to be connected to a distribution station (DS), and is not shown in FIG. 1. Also, the wireless communication network is a communication network formed within the region 100 of FIG. 1, and at least one of the electronic devices 120, 130, and 140 may transmit/receive data through the wireless communication network by accessing the AP 110. Here, an electronic device (for example, the electronic device 120) accessing the AP 110 may also be referred to as a client device or a station.

When the electronic device 120 is a display device, such as a TV, the display device may maintain an access to the AP 110 not only in a normal driving state, for example, a state in which certain content is being reproduced through a display (not shown), but also in a state in which a black screen is output through the display without reproducing content. Accordingly, the electronic device 120 may constantly maintain an access to the Wi-Fi network through the AP 110.

Hereinafter, a working mode according to a driving state of the electronic device 120 will be first described.

The working mode in which power is supplied to a plurality of components included in the electronic device 120 for normal operation may be referred to as an active mode or a normal mode. Also, a working mode in which power is turned on or off in the plurality of components included in the electronic device 120 or power is supplied to the least components required to maintain essential communication may be referred to as a suspend mode (or standby mode) or a sleep mode.

When the electronic device 120 is a display device, such as a TV, a working mode of the display device may largely include a normal mode and a suspend mode. Here, the normal mode may also be referred to as a normal working mode. In particular, the normal mode and the suspend mode may be distinguished based on whether power is supplied to at least one component other than a communication module (or a communicator) (not shown). In particular, the normal mode may denote a working state in which power is supplied to the communication module and at least one component of the display device. Also, the suspend mode may denote a working state in which power is supplied only to the communication module.

Alternatively, when the communication module does not perform a timer operation, i.e., when a component (for example, a microcomputer to be described below) other than the communication module performs the timer operation, the suspend mode may denote a working state in which power is supplied only to the communication module and the component (for example, the microcomputer) performing the timer operation.

Also, a mode in which power is supplied to the communication module and a processor (not shown) woke up by the communication module will be referred to as a low power mode (LPM). When the working mode of the electronic device, for example, the display device, is largely distinguished as the normal mode and the suspend mode, the LPM may be included in the suspend mode. Also, when the working mode is largely distinguished as the normal mode and the suspend mode in terms of the processor, because power is supplied to the processor in the LPM, the LPM may be included in the normal mode in terms of the processor. Also, a working mode in which power is supplied to the processor woke up by the communication module and power is not supplied to a component other than the processor may be separately referred to as the LPM. In particular, the LPM may indicate a state in which the communication module wakes up the processor such that power is supplied to the processor and the processor performs a certain operation but power is not supplied to a display (not shown) and thus image data is not output.

For example, in the normal mode, the display device may display a certain image. As another example, in the LPM, the display of the display device may be turned off and thus in a black screen state, but the processor may perform a certain operation.

Also, the suspend mode may indicate a mode in which only the least power is supplied such that power consumption of the display device is reduced. The suspend mode is a mode in which power of the display device is supplied the least, and indicates a working state in which power is supplied to the communication module such that a control signal or certain data may be transmitted/received to/from an external electronic device.

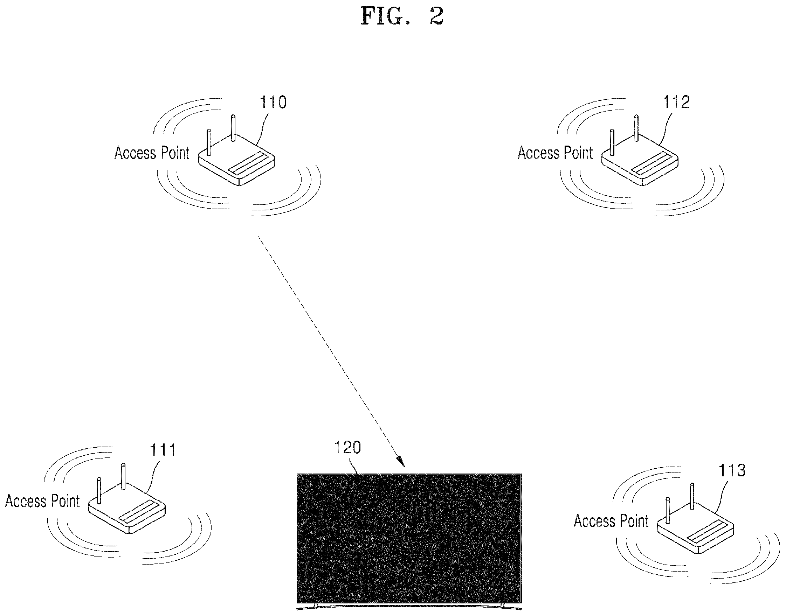

Hereinafter, including FIG. 2, an example in which the electronic device 120 that is TV accesses the AP 110 to perform wireless communication will be described.

FIG. 2 is a diagram for describing an electronic device accessing a wireless communication network and in a suspend mode.

Referring to FIG. 2, the electronic device 120 is accessed to the AP 110. Accordingly, the electronic device 120 may access the Wi-Fi network that is a wireless communication network, through the AP 110.

The electronic device 120 generally maintains an access to the Wi-Fi network from another electronic device not only in the normal mode but also in the suspend mode. For example, when the electronic device 120 is a TV that is a display device located at home and is in the suspend mode, a user may want to turn on the electronic device 120 by using his/her mobile device (not shown) from the outside and record content being reproduced at a current time point. In this case, the mobile device of the user present at a location spaced apart from a location where the electronic device 120 is located needs to be connected to the electronic device 120 through a communication network. In other words, the electronic device 120 needs to access the Wi-Fi network through the AP 110, and the mobile device also needs to be connected to the communication network connected to the AP 110 via wires or wirelessly.

Referring back to FIG. 2, the electronic device 120 in the suspend mode may maintain an access to the AP 110.

For the electronic device 120 to seamlessly communicate with another electronic device (not shown), a load of data transmission/reception of the AP 110 needs to be not high and needs to maintain a constant transmission performance.

When the load of the AP 110 is high or a low output performance (low throughput) is expected, the electronic device 120 accessing the AP 110 is unable to seamlessly transmit/receive data to/from the other electronic device by using the Wi-Fi network. When there are other APs (for example, APs 111, 112, and 113) available to the electronic device 120, the AP 110 may request the electronic device 120 to change (or transition) an AP accessed by the electronic device 120 from the AP 110 to another AP (for example, the AP 112). When the electronic device 120 is in the normal mode, the electronic device 120 may receive and process such a change request. However, when the electronic device 120 is in the suspend mode, the electronic device 120 is unable to receive and process the change request in the related art. In particular, in the related art, in a case where the electronic device 120 is in the suspend mode, even when the communication module included in the electronic device 120 receives the change request, there is no method to perform a process of transitioning an AP according to the received change request. Thus, in the related art, a change of an AP is possible only when the electronic device 120 is in the normal mode, and there is no method of changing an AP of the electronic device 120 in the suspend mode such that the electronic device 120 accesses the Wi-Fi network of high communication quality.

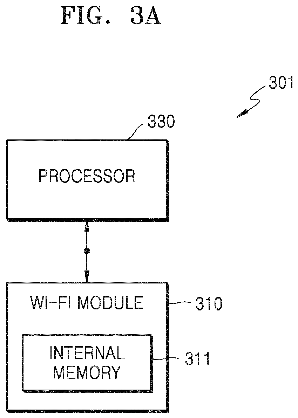

In an embodiment, even when the electronic device 120 is in the suspend mode, a request to change an AP is received and processed such that the electronic device 120 may access the Wi-Fi network of high communication quality. An electronic device and an operating method thereof, according to an embodiment, will be described in detail below with reference to FIGS. 3A through 13.

FIG. 3A is a block diagram of an electronic device according to an embodiment.

An electronic device 301 shown in FIG. 3A may correspond to an electronic device (for example, the electronic device 120) described with reference to FIGS. 1 and 2. Accordingly, while describing the electronic device 301 according to an embodiment, descriptions that overlap those of FIGS. 1 and 2 are omitted.

Referring to FIG. 3A, the electronic device 301 according to an embodiment includes a Wi-Fi module 310 and a processor 330.

In particular, the electronic device 301 includes the Wi-Fi module 310 including an internal memory 311, and the processor 330 configured to execute at least one instruction. When a first request for AP transition is received from a first AP while the processor 330 is in a suspend mode, the Wi-Fi module 310 stores the first request in the internal memory 311 and generates a wakeup signal. Then, after the processor 330 wakes up based on the wakeup signal, the Wi-Fi module 310 transmits the first request stored in the internal memory 311 to the processor 330.

Based on being woken up by the wakeup signal and the first request received from the Wi-Fi module 310, the processor 330 may control the Wi-Fi module 310 such that a first response corresponding to the first request to be transmitted to the first AP.

Hereinafter, each component included in the electronic device 301 will be described in more detail.

The Wi-Fi module 310 includes the internal memory 311. Also, the Wi-Fi module 310 may perform wireless communication with another electronic device (not shown) through a Wi-Fi network. In particular, the Wi-Fi module 310 may be a communication module for accessing the Wi-Fi network by using a communication method defined in the Wi-Fi communication standard.

For example, the Wi-Fi module 310 may perform wireless communication with the other electronic device through the Wi-Fi network, by using an AP (not shown). Alternatively, the Wi-Fi module 310 may perform wireless communication with the other electronic device through the Wi-Fi network, by using a peer-to-peer (P2P) method.

For example, the Wi-Fi module 310 may control the electronic device 301 to generate the wakeup signal and the processor 330 to wake up based on the generated wakeup signal. In particular, even when a working mode of the electronic device 301 is the suspend mode, the Wi-Fi module 310 may receive power and maintain an on-state. In other words, the Wi-Fi module 310 may always receive power regardless of the working mode of the electronic device 301. Accordingly, even when the working mode of the electronic device 301 is the suspend mode, the Wi-Fi module 310 may generate the wakeup signal and transmit the generated wakeup signal to the processor 330. Alternatively, the Wi-Fi module 310 may start an internal timer to count a set time, and wake the processor 330 up periodically at set time intervals.

The processor 330 performs at least one instruction to control an intended operation to be performed. Also, the processor 330 may control overall operations of the electronic device 301. Also, the processor 330 may control other components included in the electronic device301 such that a certain operation is performed.

In particular, the processor 330 may include an internal memory (not shown) and at least one processor (not shown) configured to execute at least one stored program. Here, the internal memory of the processor 330 may store one or more instructions. Also, the processor 330 may perform the certain operation by executing at least one of the one or more instructions stored in the internal memory.

In particular, the processor 330 may include a random-access memory (RAM) (not shown) storing a signal or data input from the outside of the electronic device 301 or used as a storage area corresponding to various tasks performed by the electronic device 301, a read-only memory (ROM) (not shown) storing a control program and/or a plurality of instructions for control of the electronic device 301, and at least one processor (not shown).

In addition, the processor 330 may include a graphics processing unit (GPU) (not shown) for graphic processing corresponding to a video. The processor 330 may be implemented as a system-on-chip (SoC) in which a core (not shown) and the GPU are integrated. Also, the processor 330 may include a multi-core greater than a single core. For example, the processor 330 may include a dual-core, a triple-core, a quad-core, a hexa-core, an octa-core, a deca-core, a dodeca-core, or hexadeca-core.

The processor 330 may be configured as a main central processing unit (CPU). In particular, after waking up, the processor 330 may control the electronic device 301 to perform a certain operation.

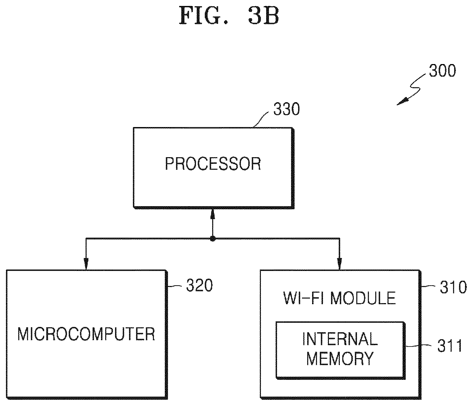

FIG. 3B is a block diagram of an electronic device according to an embodiment. An electronic device 300 shown in FIG. 3B may correspond to the electronic device 301 described with reference to FIG. 3A. Accordingly, while describing the electronic device 300 according to an embodiment, descriptions that overlap those of FIG. 3A are omitted.

In particular, the electronic device 300 may further include a microcomputer 320 compared to the electronic device 301 described in FIG. 3A.

In particular, the electronic device 300 includes the Wi-Fi module 310 including the internal memory 311, the microcomputer 320, and the processor 330 configured to execute at least one instruction. Also, based on the receiving of the first request for the AP transition from the first AP (not shown) while the processor 330 is in the suspend mode, the Wi-Fi module 310 may store the first request in the internal memory 311, generate the wakeup signal, transmit the wakeup signal to the microcomputer 320, and transmit the first request stored in the internal memory 311 to the processor 330 after the processor 330 wakes up according to control by the microcomputer 320.

Also, the processor 330 may wake up according to control by the microcomputer 320 that received the wakeup signal, and control the Wi-Fi module 310 such that the first response corresponding to the first request is transmitted to the first AP, based on the first request received from the Wi-Fi module 310.

In the electronic device 301 shown in FIG. 3A, the wakeup signal generated by the Wi-Fi module 310 may be transmitted directly to the processor 330 from the Wi-Fi module 310. On the other hand, in the electronic device 300 shown in FIG. 3B, the wakeup signal generated by the Wi-Fi module 310 may be transmitted to the microcomputer 320, and the microcomputer 320 may transmit a signal (for example, a control signal requesting wakeup or a power-on signal) for waking the processor 330 up, based on the received wakeup signal. Remaining operations of the electronic device 300 are the same as those of the electronic device 301, and thus redundant descriptions thereof are omitted.

In particular, the microcomputer 320 may wake the processor 330 up. In particular, the microcomputer 320 may be a microprocessor that wakes the processor 330 up.

For example, the microcomputer 320 may wake the processor 330 up, based on the wakeup signal received from the Wi-Fi module 310. In other words, the microcomputer 320 may wake the processor 330 up in response to receiving of the wakeup signal.

As another example, the microcomputer 320 may operate as a timer. In particular, the microcomputer 320 may operate to wake the processor 330 up every certain period. For example, the microcomputer 320 may periodically control the processor 330 in the suspend mode to wake up according to a certain operation period.

Also, the working mode of the processor 330 woke up according to control by the microcomputer 320 may be changed from the suspend mode to the LPM. Alternatively, the working mode of the processor 330 woke up according to control by the microcomputer 320 may be changed from the suspend mode to the normal mode.

Also, even when the working mode of the electronic device 300 is the suspend mode, the microcomputer 320 may receive power and maintain an on-state. Accordingly, even in the suspend mode, the microcomputer 320 may receive and process the wakeup signal from the Wi-Fi module 310. Alternatively, even in the suspend mode, the microcomputer 320 may start a timer to count a set time, and wake the processor 330 up periodically at set time intervals.

In FIG. 3B, the microcomputer 320 is illustrated as a separate component from the Wi-Fi module 310, but the microcomputer 320 may be included in the Wi-Fi module 310. In this case, when the electronic device 300 enters the suspend mode, power may be supplied to the microcomputer 320 included in the Wi-Fi module 310 when power is supplied to the Wi-Fi module 310. When an electronic device according to an embodiment does not include a microcomputer as a separate component like the electronic device 301 shown in FIG. 3A, the Wi-Fi module 310 may perform the operations of the microcomputer 320 (for example, operations performed to wake the processor 330 up). For example, when the electronic device 300 according to an embodiment does not include the microcomputer 320 as a separate component, the Wi-Fi module 310 may perform a timer operation of the microcomputer 320. Hereinafter, an electronic device according to an embodiment, in which the Wi-Fi module 310 and the microcomputer 320 are provided as independent components, will be described and illustrated as an example.

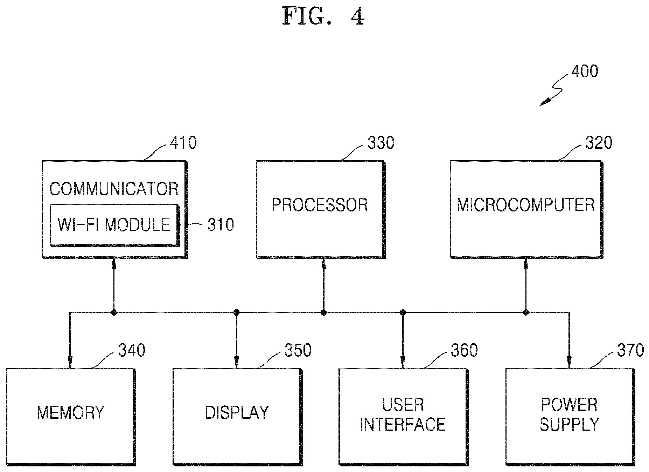

In FIGS. 4 through 13 below, an example in which an operation of waking the processor 330 up is performed by the microcomputer 320 will be described.

FIG. 4 is a block diagram of an electronic device according to another embodiment. An electronic device 400 shown in FIG. 4 may identically correspond to the electronic device 301 or 300 shown in FIG. 3A or 3B. Thus, while describing the electronic device 400, descriptions that overlap those of FIG. 3A or 3B are omitted.

Referring to FIG. 4, the electronic device 400 may include a communicator 410 including the Wi-Fi module 310 described in FIG. 3A or 3B. Also, compared to the electronic device 301 or 300 of FIG. 3A or 3B, the electronic device 400 may further include at least one of a memory 340, a display 350, a user interface 360, and a power supply 370.

The communicator 410 may perform communication with an external electronic device (not shown) through at least one wired or wireless communication network. According to an embodiment, the communicator 410 may communicate with the external electronic device. Here, the external electronic device may be a server and the communicator 410 may perform communication with the server. The server may provide an Internet of things (IoT) environment, and may include a content providing server or an Internet server. Also, when the communicator 410 communicates with the external electronic device, the wireless communication network through an AP (not shown) may be used or a communication relay of the server may be used.

In particular, the communicator 410 may include at least one communication module and a communication circuit, and may transmit/receive data to/from the external electronic device through the communication module and/or the communication circuit.

In particular, the communicator 410 may include at least one short-range communication module (not shown) performing communication according to the communication standard, such as Bluetooth, Wi-Fi, Bluetooth low energy (BLE), near field communication (NFC)/radio frequency identification (RFID), Wi-Fi direct (WFD), ultrawideband (UWB), or ZigBee.

Also, the communicator 410 may further include a long-range communication module (not shown) performing communication with a server (not shown) for supporting long-range communication according to the long-range communication standard. In particular, the communicator 410 may include the long-range communication module performing communication through a network for Internet communication. Also, the communicator 410 may include a communication network following the communication standard, such as 3rd generation (3G), 4th generation (4G), 5th generation (5G), and/or 6th generation (6G).

Also, the communicator 410 may include the short-range communication module, for example, an infrared (IR) communication module, capable of receiving a control command from a remote controller (not shown). In this case, the communicator 410 may receive a control command from the remote controller. For example, the control command received from the remote controller may include a turn-on or turn-off command.

The memory 340 may store at least one instruction. The memory 340 may store at least one instruction executed by the processor 330. Also, the memory 340 may store at least one program executed by the processor 330. Also, the memory 340 may store information or data used for operations of the electronic device 400. Also, the memory 340 may store content reproduced by the electronic device 400.

In particular, the memory 340 may include at least one type of storage medium among a flash memory type, a hard disk type, a multimedia card micro type, a card type memory (for example, a secure digital (SD) or an extreme digital (XD) memory), a random-access memory (RAM), a static RAM (SRAM), a read-only memory (ROM), an electrically erasable programmable ROM (EEPROM), a programmable ROM (PROM), a magnetic memory, a magnetic disk, and an optical disk.

The display 350 outputs an image. In particular, the display 350 may output an image corresponding to video data, through a display panel (not shown) included therein such that a user visually recognizes the video data.

The user interface 360 may receive a user input for controlling the electronic device 400. The user interface 360 may include a user input device including a touch panel detecting the user's touch, a button receiving a push operation of the user, a wheel receiving a rotation operation of the user, a keyboard, and a dome switch, but is not limited thereto.

The user interface 360 may include a voice recognition device (not shown) for voice recognition. For example, the voice recognition device may be a microphone and may receive the user's voice command or voice request. Accordingly, the processor 330 may control an operation corresponding to the voice command or voice request to be performed.

Also, the user interface 360 may include a motion detection sensor (not shown). For example, the motion detection sensor may detect movement of the electronic device 400 and receive the detected movement as a user input. Also, the voice recognition device and the motion detection device are not included in the user interface 360, but may be included in the electronic device 400 as independent modules from the user interface 360.

According to an embodiment, the user interface 360 may receive a user input of requesting to turn off the electronic device 400 while the electronic device 400 is displaying an image. Then, the processor 330 may control the electronic device 400 to enter a suspend mode in response to the received user input. In particular, the display 350 of the electronic device 400 that entered the suspend mode is switched to a black screen state, and power is supplied only to the communicator 410 while power supply to other components is blocked.

The power supply 370 supplies power to components inside the electronic device 400 under control by the processor 330. For example, the power supply 370 supplies power input from an external power source to the components inside the electronic device 400 under control by the processor 330. As another example, the power supply 370 may supply power output from one or more batteries (not shown) located inside the electronic device 400 to the internal components, under control by the processor 330.

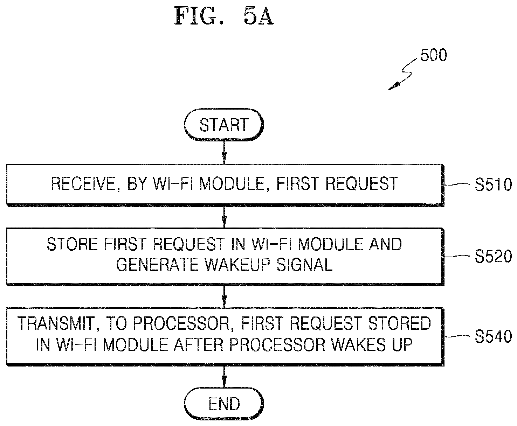

Hereinafter, operations performed by the electronic device 120, 301, 300, or 400, according to an embodiment, will be described in detail by using FIGS. 5A through 8.

FIG. 5A is a flowchart of an operating method of an electronic device, according to an embodiment. An operating method 500 of an electronic device shown in FIG. 5A indicates a flow of operations performed through a display device according to an embodiment, for example, the electronic device 120, 301, 300, or 400. Thus, descriptions about operations included in the operating method 500 of the electronic device, according to an embodiment, which overlap those of the operations of the electronic device 120, 301, 300, or 400 described with reference to FIGS. 1 through 4, are omitted.

Hereinafter, an example in which the operating method 500 of the electronic device is performed through the electronic device 300 described in FIG. 3B will be described.

The operating method 500 of the electronic device, according to an embodiment, may be an operating method of the electronic device 300 including the Wi-Fi module 310 that includes the internal memory 311, the processor 330 executing at least one instruction, and the microcomputer 320.

Referring to FIG. 5A, the operating method 500 of the electronic device includes receiving, by the Wi-Fi module 310, the first request for the AP transition from the first AP while the processor 330 is in the suspend mode (operation S510). Operation S510 may be performed by the Wi-Fi module 310. The first AP denotes an AP the electronic device 300 accesses to access the Wi-Fi network at a time point when the first request is received, and does not denote a specific AP or an AP the electronic device 300 has first accessed.

Also, the first request may be a signal requesting transition of an AP. When a current state of the first AP is a high load state or a low throughput is expected for the first AP, the electronic device 300 may be unable to seamlessly communicate through the Wi-Fi network. In this case, the first AP may transmit, to the electronic device 300 accessing the first AP, a signal requesting to transition an access to another adjacent available AP.

In particular, the first AP may identify an AP in a low load state or a high throughput expected AP from among adjacent APs accessible by the electronic device 300. Also, the first AP may transmit, to the Wi-Fi module 310 of the electronic device 300, a first signal that is a signal requesting to transition the access to the identified AP.

In particular, the first request may denote a signal requesting a BSS to be changed by moving an AP. For example, the first request may be a BSS transition management (BTM) request. Here, the BSS stands for a basic service set. The BTM request may also be referred to as a BTM request frame.

Also, the BTM request may denote a signal requesting the BSS to be changed by moving an AP for Wi-Fi network management. For example, the BTM request may be a Wi-Fi network management (WNM) BTM request. The WNM BTM request may also be referred to as a WNM BTM request frame.

The electronic device 300 may maintain a state of transmitting/receiving data through the Wi-Fi network, even in the suspend mode or LPM. In particular, even in the suspend mode or LPM, the electronic device 300 may maintain a connection between the Wi-Fi module 310 and an AP (for example, the first AP). For example, after the connection between the Wi-Fi module 310 and the AP (for example, the first AP) is established, the first AP may periodically transmit, to the Wi-Fi module 310, a signal for identifying a communication connection. For example, the first AP may maintain and identify the communication connection to the Wi-Fi module 310 by periodically broadcasting a beacon every certain time interval.

According to an embodiment, even after entering the suspend mode, the electronic device 300 may maintain an access to the Wi-Fi network through the first AP as described above, and receive the first request through the Wi-Fi network accessed through the first AP.

Then, the operating method 500 of the electronic device includes storing the first request received in operation S510 in the internal memory 311 and generating the wakeup signal (operation S520). Operation S520 may be performed by the Wi-Fi module 310.

Also, when the Wi-Fi module 310 includes the microcomputer 320 therein or the Wi-Fi module 310 performs functions of the microcomputer 320 that wakes the processor 330 up, the Wi-Fi module 310 may directly transmit, to the processor 330, the wakeup signal or a power-on request corresponding to the wakeup signal.

Alternatively, when the electronic device 301 includes the microcomputer 320 as a separate component, the operating method 500 of the electronic device may include storing the first request received in operation S510 in the internal memory 311, generating the wakeup signal, and transmitting the wakeup signal to the microcomputer 320 (operation S520).

Also, the operating method 500 of the electronic device includes transmitting the first request stored in the internal memory 311 included in the Wi-Fi module 310 to the processor 330 after the processor 330 wakes up based on the wakeup signal generated in operation S520 (operation S540). Operation S540 may be performed by the Wi-Fi module 310.

Alternatively, the operating method 500 of the electronic device may include transmitting the first request stored in the internal memory 311 included in the Wi-Fi module 310 to the processor 330 after the processor 330 wakes up according to control by the microcomputer 320 (operation S540). Operation S540 may be performed by the Wi-Fi module 310. In particular, when the wakeup signal generated in operation S520 is transmitted to the microcomputer 320, the microcomputer 320 may control the processor 330 to wake up based on the received wakeup signal.

In particular, when a set time has elapsed after the wakeup signal is transmitted in operation S520, the Wi-Fi module 310 may identify whether the processor 330 woke up and transmit the first request stored in the internal memory 311 to the processor 330, based on a result of the identifying.

In particular, based on receiving a signal indicating that the processor 330 woke up after the wakeup signal is transmitted in operation S520, the Wi-Fi module 310 may read the first request stored in the internal memory 311 and transmit the first request to the processor 330. Here, the signal indicating that the processor 330 woke up may be transmitted from the processor 330 to the Wi-Fi module 310.

In particular, the first request transmitted from the Wi-Fi module 310 to the processor 330 in operation S540 may be distinguished from the first request received in operation S510. In particular, the first request transmitted in operation S540 may be a request read from the internal memory 311 and transmitted to the processor 330 after the first request received in operation S510 is stored in the internal memory 311 included in the Wi-Fi module 310.

In a general electronic device of the related art, when an electronic device is in a suspend mode, the electronic device is unable to process operations required to transition an AP even when a request requesting to transition the AP is received. For example, even when a BTM request is received by a Wi-Fi- module, there is no method by which a processor in a suspend mode to receive and process the BTM request. According to an embodiment, based on receiving the request (for example, the first request) to transition an AP, the Wi-Fi module 310 of the electronic device (for example, the electronic device 300) operates to transmit the first request to be transmitted to the processor 330 that work up, without ignoring the received first request. In particular, the Wi-Fi module 310 stores the first request in the internal memory 311 included in the Wi-Fi module 310 and transmits the stored first request to the processor 330 that woke up after the processor 330 wakes up, such that the electronic device 300 in the suspend mode performs the AP transition.

Thus, according to an electronic device (for example, the electronic device 120, 301, 300, or 400) according to an embodiment and an operating method thereof, an AP may be transitioned even in a suspended state and thus high network access quality may be always maintained.

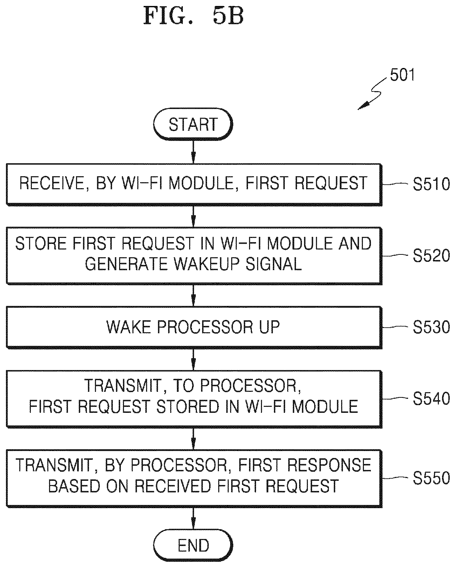

FIG. 5B is a flowchart of an operating method of an electronic device, according to another embodiment. An operating method 501 of an electronic device shown in FIG. 5B indicates a flow of operations performed through a display device according to an embodiment, for example, the electronic device 120, 301, 300, or 400. Also, the operations included in the operating method 501 of the electronic device shown in FIG. 5B, which are same as those in the operating method 500 of the electronic device shown in FIG. 5A, are illustrated by using same reference numerals. Thus, while describing the operating method 501 of the electronic device, descriptions that overlap those of the operations of the electronic device 120, 301, 300, or 400 described with reference to FIGS. 1 through 5A are omitted.

Hereinafter, an example in which the operating method 501 of the electronic device is performed through the electronic device 300 described in FIG. 3B will be described.

Referring to FIG. 5B, the operating method 501 of the electronic device includes receiving, by the Wi-Fi module 310, the first request for the AP transition from the first AP while the processor 330 is in the suspend mode (operation S510). Operation S510 may be performed by the Wi-Fi module 310.

Then, the operating method 501 of the electronic device includes storing the first request received in operation S510 in the internal memory 311 and generating the wakeup signal (operation S520). Operation S520 may be performed by the Wi-Fi module 310.

Alternatively, the operating method 501 of the electronic device includes storing the first request received in operation S510 in the internal memory 311, generating the wakeup signal, and transmitting the wakeup signal to the microcomputer 320 (operation S520). Then, subsequent to operation S520, the operating method 501 of the electronic device may include controlling the processor 330 to wake up according to control by the microcomputer 320 (operation S530). Operation S530 may be performed by the microcomputer 320.

In particular, the operating method 501 of the electronic device may include transmitting, by the microcomputer 320, the power-on signal to the processor 330, based on the wakeup signal transmitted from the Wi-Fi module 310. The processor 300 may wake up based on reception of the power-on signal. Here, the power-on signal may be a signal requesting or controlling the processor 330 to change the working state from the suspend mode to the LPM, by supplying power to the processor 330. Upon receiving the power-on signal, the processor 330 may change the working state from an inactivated state to an activated state by receiving power.

As described above, when the working mode of the electronic device 300, for example, the display device, is largely distinguished as the normal mode and the suspend mode, the LPM may be included in the suspend mode. Also, when the working mode is largely distinguished as the normal mode and the suspend mode in terms of the processor 330, because power is supplied to the processor 330 in the LPM, the LPM may be included in the normal mode in terms of the processor 330. Accordingly, when the processor 330 wakes up based on the reception of the power-on signal, it may be considered that the processor 330 enters the normal mode, but from the point of view of the electronic device 300, the electronic device 300 enters the LPM, and thus may still be in the suspend mode. When the LPM and the suspend mode are clearly distinguished from each other, it may be considered that the electronic device 300 enters the LPM in overall.

Then, after the processor 330 wakes up based on the wakeup signal, the operating method 501 of the electronic device includes reading the first request stored in the internal memory 311 and transmitting the first request to the processor 330 (operation S540). Operation S540 may be performed by the Wi-Fi module 310. In other words, the operating method 501 of the electronic device includes reading the first request stored in the internal memory 311 and transmitting the first request to the processor 330 after the processor 330 wakes up based on the wakeup signal generated in operation S520 (operation S540).

In particular, the operating method 501 of the electronic device may include reading the first request stored in the internal memory 311 and transmitting the first request to the processor 330 after the processor 330 wakes up according to control by the microcomputer 320 (operation S540). Operation S540 may be performed by the Wi-Fi module 310.

Subsequent to operation S540, the operating method 501 of the electronic device may include controlling, by the processor 330, the Wi-Fi module 310 such that the first response corresponding to the first request is transmitted to the first AP, based on the first request received in operation S540 (operation S550). Operation S550 may be performed according to control by the processor 330. Here, the first response may be a signal indicating that the first request is accepted and a BSS is changed by moving an AP.

For example, the first response may be a BTM response indicating acceptance of the BTM request. The BTM response may also be referred to as a BTM response frame.

Also, the BTM response may denote a signal indicating that the BSS is to be changed by moving an AP for Wi-Fi network management. For example, the BTM response may be a WNM BTM response. The WNM BTM response may also be referred to as a WNM BTM response frame.

After the electronic device 300 transmits the first response to the first AP, the processor 330 may perform an operation for AP transition.

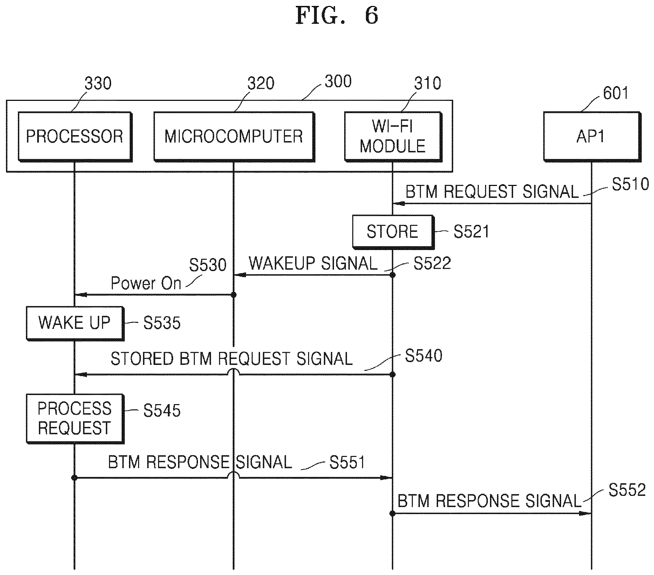

FIG. 6 is a diagram for describing an operating method of an electronic device, according to an embodiment. In particular, FIG. 6 is a diagram for describing, in detail, operations performed by the electronic device 120, 301, 300, or 400, according to an embodiment. Among the operations shown in FIG. 6, those identical to FIGS. 5A and 5B are illustrated by using same reference numerals. Thus, while describing the operations of FIG. 6, descriptions overlapping those of FIGS. 1 through 5B will be omitted.

Hereinafter, for convenience of descriptions, an example in which the operations shown in FIG. 6 are performed by the electronic device 300 of FIG. 3B will be described. Thus, the Wi-Fi module 310 shown in FIG. 6 includes the internal memory 311.

In FIG. 6, the first AP described above is simply indicated as an AP1 601, and an example in which the first request is a BTM request signal and the first response is a BTM response signal will be described.

Referring to FIG. 6, the AP1 601 may transmit the BTM request signal to the Wi-Fi module 310 when a state of the AP1 601 is not a state capable of seamlessly communicating through the Wi-Fi network. The electronic device 300 is in the suspend mode at a time point when the Wi-Fi module 310 receives the BTM request signal. In other words, the Wi-Fi module 310 of the electronic device 300 in the suspend mode may receive the BTM request signal (operation S510).

Referring to FIG. 6, operation S520 described in FIGS. 5A and 5B may include operations S521 and S522. In particular, the Wi-Fi module 310 stores the BTM request signal received in operation S510, in the internal memory 311 (operation S521). Then, in response to the reception of the BTM request signal, the Wi-Fi module 310 may generate the wakeup signal and transmit the wakeup signal to the microcomputer 320 (operation S522).

The microcomputer 320 may wake the processor 330 up, based on the wakeup signal received in operation S522. In particular, the microcomputer 320 may transmit, to the processor 330, the power-on signal for waking the processor 330 up, in response to the wakeup signal received in operation S522 (operation S530).

The processor 330 may wake up according to control by the microcomputer 320 (operation S535).

When the processor 330 wakes up, the Wi-Fi module 310 may read the BTM request signal stored in the internal memory 311 and transmit the read BTM request signal to the processor 330.

In particular, after identifying that the processor 330 woke up, the Wi-Fi module 310 may read the BTM request signal stored in the internal memory 311 and transmit the read BTM request signal to the processor 330 (operation S540).

For example, the Wi-Fi module 310 may identify that the processor 330 woke up, based on a signal transmitted from the processor 330. For example, after waking up, the processor 330 may transmit, to the Wi-Fi module 310, the signal indicating the wakeup. In particular, the Wi-Fi module 310 and the processor 330 may be connected to each other through a communication interface, for example, a universal serial bus (USB), a serial peripheral interface (SPI), or a medium independent interface (XMII). When the processor 330 wakes up and thus is able to transmit/receive a signal to/from the Wi-Fi module 310, the processor 330 may transmit, to the Wi-Fi module 310, a signal indicating the same, for example, a USB ready signal. Then, upon receiving the USB ready signal, the Wi-Fi module 310 may identify that the processor 330 woke up.

Alternatively, the Wi-Fi module 310 may transmit, to the processor 330, a signal for identifying the wakeup, and identify whether the processor 330 transmits a response signal in response thereto. In this case, the Wi-Fi module 310 may determine that the processor 330 woke up, based on reception of the response signal.

Referring back to FIG. 6, the processor 330 may process the BTM request signal transmitted in operation S540 (operation S545). In particular, to process a request for AP transition according to the BTM request signal, the processor 330 may generate a BTM response signal and perform a preparation operation for the AP transition.

Then, the processor 330 may control the BTM response signal to be transmitted to the AP1 601 through the Wi-Fi module 310. In particular, the processor 330 may transmit the BTM response signal to the Wi-Fi module 310 (operation S551). Next, the Wi-Fi module 310 may transmit the BTM response signal received from the processor 330 to the AP1 601 (operation S552).

Upon receiving the BTM response signal, the AP1 601 may transmit, to another AP, information required for a connection to the electronic device 300, such that a connection to the electronic device 300 is released and the electronic device 300 may access the other AP. Also, the first AP may transmit, to the electronic device 300, information required for a communication connection to the other AP.

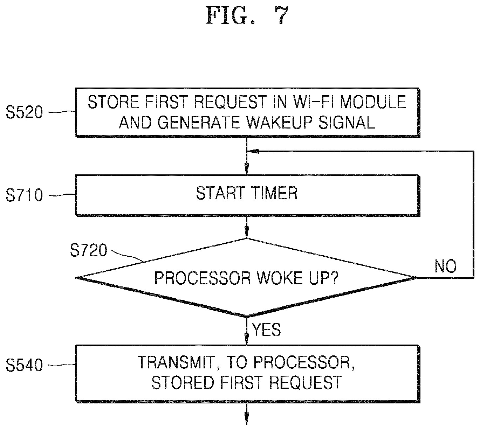

FIG. 7 is a diagram for describing an operation of identifying wakeup of a processor in an operating method of an electronic device, according to an embodiment. In particular, operations performed by the Wi-Fi module 310 included in the electronic device 120, 301, 300, or 400, according to an embodiment of FIG. 7, to identify the wakeup of the processor 330, will be described. Among the operations shown in FIG. 7, those identical to FIGS. 5A and 5B are illustrated by using same reference numerals.

Referring to FIG. 7, the Wi-Fi module 310 may start a timer to count a certain period of time after performing operation S520 (operation S710). Here, the timer may be included in the Wi-Fi module 310. Alternatively, the timer may be included in the microcomputer 320 and in this case, the Wi-Fi module 310 may request the microcomputer 320 to start the timer.

When a certain set period of time has elapsed through the timer according to running of the timer, the Wi-Fi module 310 may identify whether the processor 330 woke up (operation S720). As described above, the identifying in operation S720 may be performed based on whether the Wi-Fi module 310 has received the signal indicating that the processor 330 is in the state capable of transmitting/receiving a signal to/from the Wi-Fi module 310, for example, the USB ready signal, within the certain set period of time.

When it is identified that the processor 330 woke up in operation S720, the Wi-Fi module 310 reads the first request stored in the internal memory 311 and transmits the first request to the processor 330 (operation S540).

When it is identified that the processor 330 did not wake up in operation S720, the Wi-Fi module 310 may return to operation S710 and start the timer again.

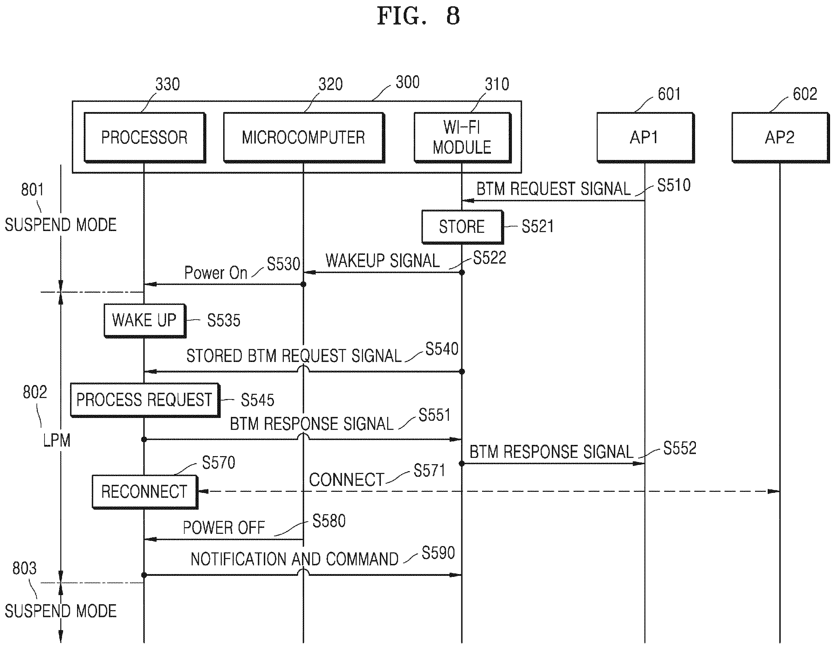

FIG. 8 is a diagram for describing an operating method of an electronic device, according to another embodiment. In particular, FIG. 8 is a diagram for describing, in detail, operations performed by the electronic device 120, 301, 300, or 400, according to an embodiment. Among the operations shown in FIG. 8, those identical to FIGS. 5A, 5B, and 6 are illustrated by using same reference numerals. Thus, while describing the operations of FIG. 8, descriptions overlapping those of FIGS. 1 through 7 will be omitted.

Hereinafter, for convenience of descriptions, an example in which the operations shown in FIG. 8 are performed by the electronic device 300 will be described. Thus, the Wi-Fi module 310 shown in FIG. 8 includes the internal memory 311.

Referring to FIG. 8, the electronic device 300 may be in a suspend mode 801 before the processor 330 wakes up in operation S535. Also, when the processor 330 wakes up in operation S535, the working state of the electronic device 300 may be changed from the suspend mode 801 to an LPM 802. In the LPM 802, power may be supplied to the Wi-Fi module 310, microcomputer 320, and processor 330 included in the electronic device 300. Also, in the LPM 802, power is not supplied to other components included in the electronic device (for example, the electronic device 400), for example, the memory 340, display 350, and user interface 360. Accordingly, when the electronic device 300 includes a display (not shown), the display maintains an off-state and thus may maintain a state of outputting a black screen.

When the processor 330 wakes up, the processor 330 may transmit, to the Wi-Fi module 310, the BTM response signal corresponding to the BTM request signal transmitted in operation S540 (operation S551).

Then, the processor 330 may control an AP the Wi-Fi module 310 accesses to move from the AP1 601 to a second AP (AP2) 602. In particular, the processor 330 may perform operations S570 and S571. Here, the AP2 602 is an AP accessible by the electronic device 300, and may be an AP in a low load state and/or a high throughput expected AP compared to the AP1 601. Also, the AP2 602 may be an AP identified or designated, by the AP1 601, as a target of the AP transition of the electronic device 300.

In particular, operations required for the AP2 602 and the electronic device 300 to be communicably connected to each other may be performed (operation S570). In particular, in operation S570, the processor 330 may obtain information required for a communication connection with the AP2 602. Then, based on the obtained information required for the communication connection, the processor 330 may control the electronic device 300 and the AP2 602 to be communicably connected to each other. In particular, the processor 330 may obtain, from the AP1 601, SSID and an MAC address of the AP2 602 required for the communication connection to the AP2 602.

Accordingly, the electronic device 300 may release the communication connection with the AP1 601 and establish the communication connection with the AP2 602 (operation S571). Accordingly, the Wi-Fi module 310 may access the AP2 602, and the Wi-Fi module 310 may access the Wi-Fi network through the AP2 602.

Based on the AP transition being completed, the processor 330 may enter a suspend mode 803 that is an original state.

In particular, the microcomputer 320 may transmit, to the processor 330, a signal requesting or commanding the processor 330 to enter a suspend mode, for example, a power-off signal (operation S580). In particular, when the AP transition is completed and thus the electronic device 300 accesses the AP2 602, the microcomputer 320 may transmit the power-off signal to the processor 330 (operation S580).

Based on the power-off signal transmitted from the microcomputer 320, the processor 330 may entire the suspend mode 803 to be in a sleep state, i.e., the original state.

In particular, the processor 330 may transmit, to the Wi-Fi module 310, a command for maintaining a connection with the AP2 602 and a notification indicating entrance to a suspend mode, based on the AP transition being completed (operation S590). After operation S590, the processor 330 may enter the suspend mode 803. Accordingly, the processor 330 may return to the original working state.

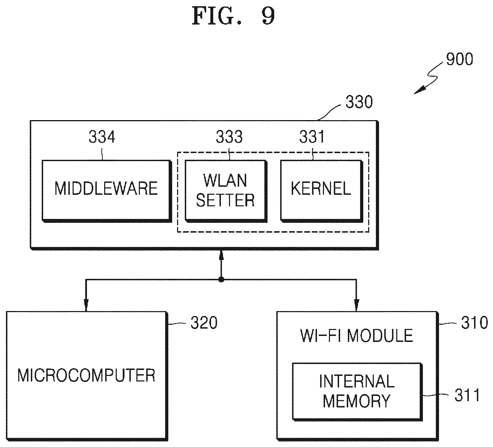

FIG. 9 is a block diagram of an electronic device according to another embodiment.

An electronic device 900 shown in FIG. 9 may identically correspond to the electronic device 300 shown in FIG. 3B. Thus, while describing the electronic device 900, descriptions that overlap those of FIG. 3B are omitted.

Referring to FIG. 9, the processor 330 may include a middleware 334, a WLAN setter 333, and a kernel 331.

For example, the middleware 334, the WLAN setter 333, and the kernel 331 may be distinguished and provided as software. In particular, the middleware 334, the WLAN setter 333, and the kernel 331 may be provided in a set of at least one instruction such that operations distinguished from each other are performed by the at least one instruction.

The kernel 331 may be formed as a driver transmitting/receiving a signal to/from the Wi-Fi module 310. In particular, the kernel 331 may perform a function of delivering, to the Wi-Fi module 310, an event, signal, command, request, and/or information generated by the middleware 334 or WLAN setter 333. Alternatively, the kernel 331 may deliver, to the middleware 334 or WLAN setter 333, an event, signal, command, request, and/or information delivered from the Wi-Fi module 310. The kernel 331 may also be referred to as a driver or a Wi-Fi driver.

The WLAN setter 333 may perform settings required for a Wi-Fi network connection by performing WLAN setting called Wi-Fi-protected access (WPA) supplicant. In particular, the WLAN setter 333 may perform functions of a Wi-Fi manager performing operations required to control Wi-Fi communication. Hereinbelow, the WLAN setter 333 of FIG. 9 is illustrated as a WPA supplicant 333.

The middleware 334 may perform actual control for connecting, maintaining, or changing a Wi-Fi network.

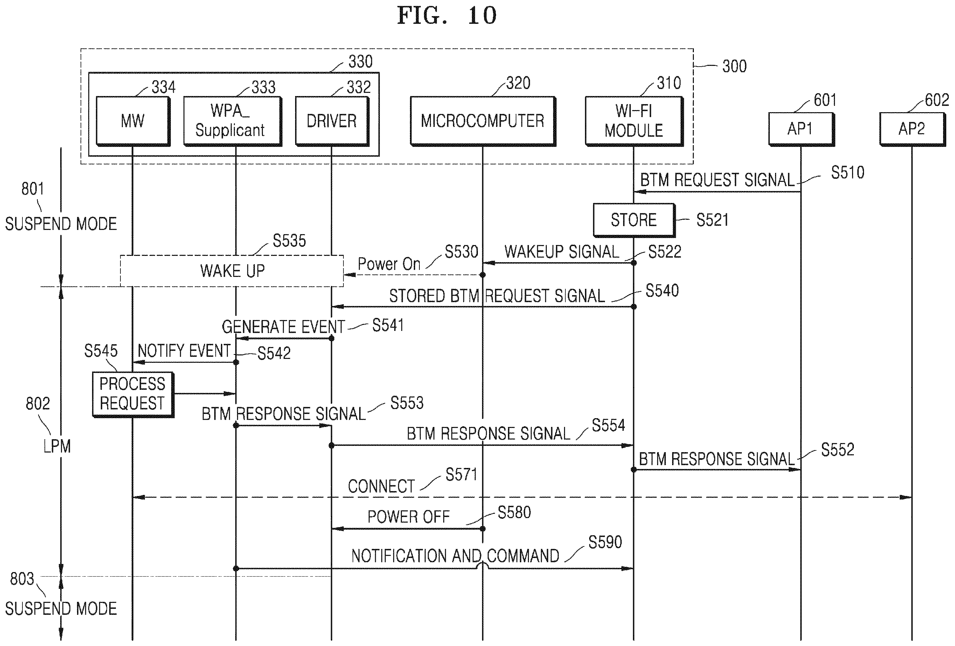

Hereinafter, detailed operations of the processor 330 including the middleware 334, the WLAN setter 333, and the kernel 331 will be described with reference to FIG. 10. Also, the middleware 334, the WLAN setter 333, and the kernel 331 described in FIG. 9 are respectively illustrated as an MW, a WPA_supplicant, and a driver in FIG. 10, which are corresponding terms.

FIG. 10 is a diagram for describing an operating method of an electronic device, according to another embodiment. In particular, FIG. 10 is a diagram for describing, in detail, operations performed by the electronic device 120, 300, 400, or 900, according to an embodiment. Among the operations shown in FIG. 10, those identical to FIGS. 1 and 9 are illustrated by using same reference numerals. Thus, while describing the operations of FIG. 10, descriptions overlapping those of FIGS. 1 through 9 will be omitted.

Hereinafter, for convenience of descriptions, an example in which the operations shown in FIG. 10 are performed by the electronic device 900 of FIG. 9 will be described. The operations of FIG. 10, which are not described with reference to FIG. 8, will be mainly described.

Referring to FIG. 10, the BTM request signal transmitted in operation S540 may be transmitted to a driver 332. In particular, operation S540 described with reference to FIGS. 6 and 8 may include operations S541 and S542. In particular, the driver 332 may generate an event corresponding to the received BTM request signal, and transmit the vent to the WPA_supplicant 333 (operation S541). The event may be an event signal indicating that the BTM request signal has been received. Then, the WPA_supplicant 333 may transmit a signal indicating the event to the MW 334 (operation S542).

The MW 334, which has received the event transmitted in operation S542, may process a request corresponding to the event (operation S545). In particular, in response to the event, the MW 334 may perform control for transitioning an AP.

In particular, the MW 334 may control the WPA_supplicant 333 such that the BTM response signal corresponding to the BTM request signal is transmitted to the AP1 601. Then, according to control by the MW 334, the WPA_supplicant 333 may generate the BTM response signal and transmit the BTM response signal to the driver 332 (operation S553). Then, the driver 332 may transmit the BTM response signal to the Wi-Fi module 310 (operation S554).

Then, according to control by the MW 334, operation S571 described with reference to FIG. 8 may be performed.

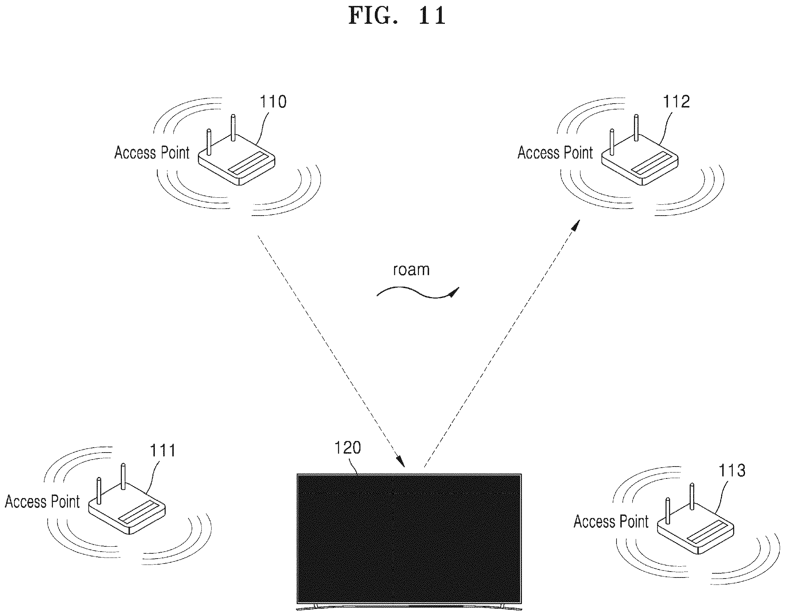

FIG. 11 is a diagram for describing transition of an AP accessed by an electronic device in a suspend mode. In FIG. 11, same components as in FIG. 2 are illustrated using same reference numerals. Also, the electronic device 120 may identically correspond to the electronic device 120, 300, 400, or 900 described with reference to FIGS. 3 through 9.

Referring to FIG. 11, the electronic device 120 may perform AP transition or change even in the suspend mode. When the electronic device 120 is a display device outputting an image through a display, the electronic device 120 in the suspend mode may output a black screen as shown in FIG. 11.

As described with reference to FIGS. 8 and 10, the electronic device 120 according to an embodiment may receive the first signal, for example, the BTM request signal, requesting the AP transition while in the suspend mode 801, perform the AP transition by changing the working state to the LPM 802, and then enter the suspend mode 803 that is the original state again. For example, the electronic device 120 may change or transition an AP being accessed in the suspend mode from the AP 110 to an AP 112, according to an operating method according to an embodiment.

Accordingly, the electronic device 120 may complete the AP transition while continuously outputting the black screen without having to change to a normal state. Thus, according to an embodiment, the electronic device 120 in the suspend mode performs operations required for the AP transition without having to change the working state to the normal state, and thus continuously maintains a state of accessing the Wi-Fi network having high signal quality. Accordingly, the electronic device 120 may maintain the high signal quality of the accessed Wi-Fi network while reducing power consumption.

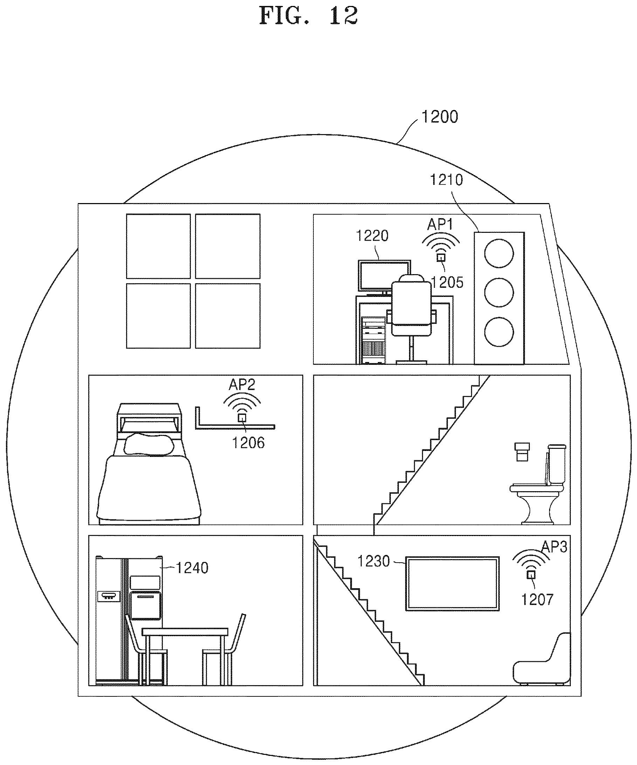

FIG. 12 is a diagram for describing an example of using an electronic device, according to an embodiment.

The electronic device 120, 300, 400, or 900 according to an embodiment may be a wireless client device located in a mesh network 1200 formed by a plurality of APs.

The mesh network 1200 may denote a network including a plurality of APs in a certain space such that electronic devices located in the certain space accesses at least one of the plurality of APs.

The mesh network 1200 may be a wireless communication network formed by expanding an existing Wi-Fi zone accessible to one AP to a wider range. For example, the mesh network 1200 may be formed in units of homes, at least one building, or a plurality of adjacent spaces.

FIG. 12 illustrates an example in which a house of a user is a detached house including three floors. The mesh network 1200 may be formed in the house of the user. In this case, the mesh network 1200 may include three APs, i.e., an AP1 1205, an AP2 1206, and a third AP (AP3) 1207, and a plurality of electronic devices, for example, an air conditioner 1210, a computer 1220, a refrigerator 1240, and a display device 1230, may be arranged in the house.

The plurality of electronic devices in the house, for example, the air conditioner 1210, the computer 1220, the refrigerator 1240, and the display device 1230, such as a TV, may be connected to at least one of the plurality of APs forming the mesh network 1200, for example, the AP1 1205, the AP2 1206, and the AP3 1207. Each of the plurality of electronic devices in the house may change an accessed AP according to an AP transition method according to an embodiment, considering a communication state of the accessed AP.

For example, the display device 1230 in a suspend mode may access the AP3 1207. When a communication state of the AP3 1207 is not good, for example, when a load of the AP3 1207 is high or a low throughput is expected for the AP3 1207, the display device 1230 may change an accessed AP to another AP, for example, the AP2 1206, based on a BTM request signal received from the AP3 1207.

Also, the mesh network 1200 may be used to implement an loT environment.

Recently, a technology for using and/or controlling the plurality of electronic devices by connecting the plurality of electronic devices to a wireless communication network has been widely developed such that the plurality of electronic devices are controllable by a technology, such as an IoT platform. Here, the wireless communication network used to implement the loT platform may be the mesh network 1200 described above.

In particular, loT indicates that all things (for example, electronic devices), such as a display device like a TV, a smart phone, a PC, a vehicle, a refrigerator, a washing machine, and a watch, are connected to a wireless network. It is possible for the plurality of electronic devices to exchange data, process data, and be automatically driven by using loT. For example, the user may adjust the display device 1230 in the house by using a smart phone outside the house.

To implement the IoT environment, the plurality of electronic devices, for example, the smart phone of the user located at a remote place from the house and the display device 1230 located inside the house of the user, need to always maintain a communicable state.

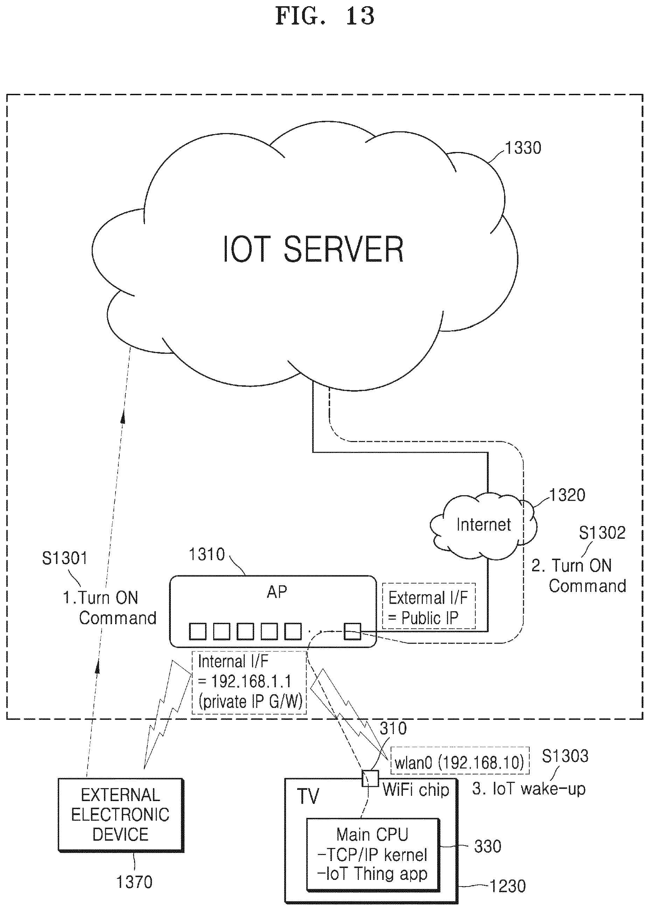

To implement the loT environment even in the suspend mode, the electronic device according to an embodiment needs to maintain an access to an loT server through the Wi-Fi network. An example in which an electronic device according to an embodiment is the display device 1230 will be described in FIG. 13 below.

FIG. 13 is a diagram for describing an electronic device according to an embodiment, which operates in an IoT environment. In FIG. 13, components that are same as those in FIGS. 3B and 12 are illustrated using same reference numerals. Thus, overlapping details thereof are omitted.

In FIG. 13, an AP 1310 may be any one of the plurality of APs 1205, 1206, and 1207 located in the mesh network 1200 described in FIG. 12. Also, the AP 1310 may be an AP changed when the AP transition according to an embodiment described with reference to FIGS. 1 through 11 is performed. In other words, the AP 1310 may correspond to the AP2 602 described in FIGS. 8 and 10.

In particular, the display device 1230 may always maintain an access to an loT server regardless of a working state. In particular, the display device 1230 may maintain a connected state with an AP and maintain an access to the loT server through the AP, even in a suspend mode or LPM of outputting a block screen. In this case, the display device 1230 may perform the AP transition so as to maintain high signal quality of an accessed Wi-Fi network. Accordingly, the display device 1230 always maintains a state of being connected to the Wi-Fi network having high signal quality, regardless of the working state, and thus may seamlessly communicate with the loT server.

Referring to FIG. 13, the display device 1230 and an external electronic device 1370 may be connected to each other through a home loT platform. In particular, the display device 1230 and the external electronic device 1370 may be connected to each other through a wireless communication network such as an Internet network. In particular, the display device 1230 and the external electronic device 1370 may be connected to each other through an IoT cloud and the AP 1310 forming an IoT platform. Here, the display device 1230 may be located in a space (for example, inside a house) implementing an loT environment. Also, the external electronic device 1370 is a device for controlling the display device 1230 by using the loT platform, and may be an electronic device located at a remote place from the space (for example, inside a house) implementing the loT environment. For example, the external electronic device 1370 may be a mobile device of a user.

An loT server 1330 may denote a server, cloud server, or cloud server device that is connected to a plurality of electronic devices located at a long distance so as to support the loT platform. In particular, the loT server 1330 is a computing device operating to provide a platform or service according to loT by supporting a communication connection between a plurality of electronic devices through a network, and may be implemented as software and/or hardware.

The display device 1230 may perform various operations according to control by the external electronic device 1370, and the display device 1230 may perform required operations according to control by the external electronic device 1370. As described above, the user may be located at a long distance from a space where the display device 1230 is located.

Hereinafter, an example in which a control signal received by the display device 1230 implementing the loT platform from the external electronic device 1370 is a turn-on signal will be described.

For example, the user may want a program recording operation to be performed by turning on the display device 1230 located inside a house by using the external electronic device 1370 carried by the user. In this case, the external electronic device 1370 may transmit, to the display device 1230, a signal requesting the display device 1230 to be turned on, in response to a user input. In FIG. 13, for convenience of illustration, an AP the external electronic device 1370 accesses is not shown. In general, when the external electronic device 1370 is spaced apart from the display device 1230, the AP the external electronic device 1370 accesses and the AP 1310 the display device 1230 accesses may be different from each other. Alternatively, when the external electronic device 1370 and the display device 1230 are located in a same space (for example, a space corresponding to a same BSS), the AP the external electronic device 1370 accesses and the AP 1310 the display device 1230 accesses may be the same.

Also, the AP 1310 may function as a bridge connecting the Wi-Fi network that is a WLAN to which the display device 1230 is connected and a mobile communication network connected to the loT server 1330 to each other. Also, in FIG. 13, to implement the loT platform, an example in which the Internet 1320 that is a network using a transmission control protocol (TCP)/Internet protocol (IP) communication protocol that is an Internet protocol is used will be illustrated and described.

Also, the processor 330 included in the display device 1230 may include an IoT application (indicated as "loT thing app" in FIG. 13) and a TCP/IP kernel. Here, the loT application is an application enabling the loT platform to be implemented and may control operations performed through the loT platform. The TCP/IP kernel controls and takes charge of transmission/reception of data based on TCP/IP communication protocol that is an Internet protocol. Hereinafter, for convenience of description, the TCP/IP communication protocol will be simply referred to as a TCP/IP protocol.

Hereinafter, an operation of remotely turning on the display device 1230 by using the loT platform after the display device 1230 is turned off and enters a suspend mode will be described.

To remotely turn on the display device 1230, the external electronic device 1370 may transmit, to the loT server 1330 through an AP (not shown), a command requesting the display device 1230 to be turned on (operation S1301).

The Wi-Fi module 310 may receive, from the loT server 1330, a packet corresponding to the command requesting the turn-on (operation S1302). In particular, the loT server 1330 may generate a control signal for turning on the display device 1230, based on the command received in operation S1301, and control a packet corresponding to the generated control signal to be transmitted to the display device 1230 through the AP 1310. Accordingly, the Wi-Fi module 310 of the display device 1230 may receive the packet corresponding to the control signal. Also, the Wi-Fi module 310 may generate a wake-up pulse for waking the processor 330 up, based on the received packet, and control the display device 1230 to enter the LPM.

Here, for the display device 1230 to normally receive a signal transmitted from the external electronic device 1370, the display device 1230 and the external electronic device 1370 need to always maintain a communication connection. For example, the display device 1230 needs to maintain a communication connection with the external electronic device 1370 even when the display device 1230 is turned off and enters the suspend mode. When communication quality of the AP 1310 deteriorates, it is unable for the display device 1230 to normally receive the signal transmitted from the external electronic device 1370.

Thus, according to an embodiment, an accessed AP may be transitioned even when the display device 1230 is in a suspended state, such that the display device 1230 and the external electronic device 1370 always seamlessly communicate with each other. Accordingly, the Wi-Fi module 310 of the display device 1230 transitions to and accesses an AP having high communication quality, and thus the control signal corresponding to the turn-on command may be seamlessly received from the AP 1310. Thus, the display device 1230 may wake up quickly and accurately based on the received control signal (operation S1303).

As described with reference to FIGS. 12 and 13, when an electronic device according to an embodiment accesses a Wi-Fi network by an IoT platform, AP transition for maintaining high communication quality may be performed even when the electronic device is in a suspend mode, and thus the high communication quality may be always maintained. Accordingly, the electronic device can implement a highly reliable Internet of things environment.

An operating method of an electronic device, according to an embodiment, may be recorded on a computer-readable recording medium by being implemented in a form of program commands executed by using various computers. Further, an embodiment may include a computer-readable recording medium having recorded thereon one or more programs including instructions for executing an operating method of an electronic device, according to an embodiment.

The computer-readable recording medium may include at least one of a program command, a data file, or a data structure. The program commands recorded in the computer-readable recording medium may be specially designed or well known to one of ordinary skill in the computer software field. Examples of the computer-readable recording medium include magnetic media such as hard disks, floppy disks, and magnetic tapes, optical media such as CD-ROMs and DVDs, magneto-optical media such as floptical disks, and hardware devices specially configured to store and perform program commands, such as read-only memory (ROM), random-access memory (RAM), and flash memory. Examples of the computer command include machine codes generated by a compiler, and high-level language codes executable by a computer by using an interpreter.

A machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semipermanently and a case where the data is stored in the storage medium temporarily. For example, the "non-transitory storage medium" may include a buffer where data is temporarily stored.

Furthermore, an operating method of an electronic device, according to an embodiment, may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store (for example, Play Store^{™}) or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

In detail, the computer program product may include a recording medium storing a program for executing an operating method of an electronic device, according to an embodiment.

While the embodiments of the present disclosure have been particularly shown and described in detail, it will be understood by one of ordinary skill in the art that various changes in form and details may be made therein without departing from the scope of the present disclosure as defined by the following claims.

## Claims

1. An electronic device comprising:
a Wi-Fi module (310) including an internal memory (311);
a microcomputer (320); and
a processor (330) configured to execute at least one instruction,
wherein the Wi-Fi module is configured to:
store a basic service set, BSS, transition management, BTM, request for access point transition in the internal memory and
generate a wakeup signal, based on reception of the BTM request received from a first Wi-Fi access point (601) while the processor is in a suspend mode (801),
wherein the suspend mode comprises a working state in which power is supplied to the least components of the electronic device required to maintain communication; and
transmit the BTM request stored in the internal memory to the processor after the processor wakes up based on the wakeup signal;
wherein the processor is configured to:
execute at least one instruction to control the Wi-Fi module to transmit, to the first Wi-Fi access point, a BTM response corresponding to the BTM request; and
execute at least one other instruction to control the Wi-Fi module to transition from the first Wi-Fi access point to a second Wi-Fi access point (602), when the BTM response is transmitted to the first Wi-Fi access point.

2. The electronic device of claim 1, wherein the microcomputer (320) is configured to receive the wakeup signal transmitted from the Wi-Fi module (310) and transmit a power-on signal to the processor (330), based on the wakeup signal
wherein the processor is further configured to execute the at least one instruction to wake up based on reception of the power-on signal.

3. The electronic device of claim 1, wherein the Wi-Fi module (310) is further configured to identify whether the processor (330) woke up when a set period of time has elapsed after the wakeup signal is transmitted, and transmit the BTM request stored in the internal memory (311) to the processor, based on a result of the identifying.

4. The electronic device of claim 1, wherein the Wi-Fi module (310) is further configured to transmit the BTM request stored in the internal memory (311) to the processor (330), based on reception of a signal indicating that the processor woke up.

5. The electronic device of claim 1, wherein the processor (330) is further configured to execute the at least one instruction to enter the suspend mode (803) when the transition of the access point is completed.

6. The electronic device of claim 5, wherein the processor (330) is further configured to execute the at least one instruction to enter the suspend mode (803) after transmitting, to the Wi-Fi module (310), a command for maintaining a connection with the second access point (602) and a notification indicating entry to the suspend mode, based on the transition of the access point being completed.

7. The electronic device of claim 1, wherein the Wi-Fi module (310) is further configured to maintain an access to an Internet of things (IoT) server while in the suspend mode (803).

8. The electronic device of claim 1, being a wireless client device located within a mesh network (1200) formed by a plurality of access points.

9. An operating method of an electronic device comprising a Wi-Fi module (310) including an internal memory (311), a microcomputer (320), and a processor (330) configured to execute at least one instruction,
the operating method comprising:
receiving, by the Wi-Fi module, a basic service set, BSS, transition management, BTM, request request for access point transition from a first Wi-Fi access point (601) while the processor is in a suspend mode (801),
wherein the suspend mode comprises a working state in which power is supplied to the least components of the electronic device required to maintain communication;
storing, by the Wi-Fi module, the received BTM request in the internal memory and generating a wakeup signal;
transmitting, by the Wi-Fi module, the BTM request stored in the internal memory to the processor after the processor wakes up based on the wakeup signal;
controlling, by the processor, the Wi-Fi module to transmit a BTM response corresponding to the BTM request to the first Wi-Fi access point; and
controlling, by the processor, the Wi-Fi module to transition from the first Wi-Fi access point to a second Wi-Fi access point (602) when the BTM response is transmitted to the first Wi-Fi access point.

10. The operating method of claim 9, wherein the transmitting of the stored BTM request to the processor (330) comprises:
identifying, by the Wi-Fi module (310), whether the processor woke up when a set period of time has elapsed after the wakeup signal is transmitted; and
transmitting the BTM request stored in the internal memory (311) included in the Wi-Fi module to the processor, based on a result of the identifying.

## Patentansprüche

1. Elektronische Vorrichtung, umfassend:
ein Wi-Fi-Modul (310), das einen internen Speicher (311) beinhaltet;
einen Mikrocomputer (320); und
einen Prozessor (330), der dazu konfiguriert ist, zumindest eine Anweisung auszuführen,
wobei das Wi-Fi-Modul zu Folgendem konfiguriert ist:
Speichern einer Basic-Service-Set-, BSS-Übergangsverwaltungs-, BTM-Anforderung für Zugangspunktübergang in dem internen Speicher, und
Erzeugen eines Aufwachsignals basierend auf Empfang der BTM-Anforderung, die von einem ersten Wi-Fi-Zugangspunkt (601) empfangen wird, während der Prozessor in einem Suspend-Modus (801) ist,
wobei der Suspend-Modus einen Arbeitszustand umfasst, in dem Leistung den geringsten Komponenten der elektronischen Vorrichtung, die erforderlich sind, um Kommunikation aufrechtzuerhalten, zugeführt wird; und
Übertragen der BTM-Anforderung, die in dem internen Speicher gespeichert ist, an den Prozessor, nachdem der Prozessor aufwacht, basierend auf dem Aufwachsignal;
wobei der Prozessor zu Folgendem konfiguriert ist:
Ausführen von zumindest einer Anweisung, um das Wi-Fi-Modul zu steuern, um an den ersten Wi-Fi-Zugangspunkt eine BTM-Antwort entsprechend der BTM-Anforderung zu übertragen; und
Ausführen von zumindest einer weiteren Anweisung, um das Wi-Fi-Modul zu steuern, um von dem ersten Wi-Fi-Zugangspunkt zu einem zweiten Wi-Fi-Zugangspunkt (602) überzugehen, wenn die BTM-Antwort an den ersten Wi-Fi-Zugangspunkt übertragen wird.

2. Elektronische Vorrichtung nach Anspruch 1, wobei der Mikrocomputer (320) dazu konfiguriert ist, das Aufwachsignal zu empfangen, das von dem Wi-Fi-Modul (310) übertragen wird, und ein Einschaltsignal an den Prozessor (330) basierend auf dem Aufwachsignal zu übertragen,
wobei der Prozessor ferner dazu konfiguriert ist, die zumindest eine Anweisung zum Aufwachen basierend auf Empfang des Einschaltsignals auszuführen.

3. Elektronische Vorrichtung nach Anspruch 1, wobei das Wi-Fi-Modul (310) ferner dazu konfiguriert ist, zu identifizieren, ob der Prozessor (330) aufgewacht ist, wenn eine festgelegte Zeitspanne verstrichen ist, nachdem das Aufwachsignal übertragen wird, und die BTM-Anforderung, die in dem internen Speicher (311) gespeichert ist, an den Prozessor basierend auf einem Ergebnis des Identifizierens zu übertragen.

4. Elektronische Vorrichtung nach Anspruch 1, wobei das Wi-Fi-Modul (310) ferner dazu konfiguriert ist, die BTM-Anforderung, die in dem internen Speicher (311) gespeichert ist, an den Prozessor (330) basierend auf dem Empfang eines Signals, das angibt, dass der Prozessor aufgewacht ist, zu übertragen.

5. Elektronische Vorrichtung nach Anspruch 1, wobei der Prozessor (330) ferner dazu konfiguriert ist, die zumindest eine Anweisung auszuführen, um in den Suspend-Modus (803) einzutreten, wenn der Übergang des Zugangspunktes abgeschlossen ist.

6. Elektronische Vorrichtung nach Anspruch 5, wobei der Prozessor (330) ferner dazu konfiguriert ist, die zumindest eine Anweisung auszuführen, um in den Suspend-Modus (803) einzutreten, nachdem an das Wi-Fi-Modul (310) ein Befehl zum Aufrechterhalten einer Verbindung mit dem zweiten Zugangspunkt (602) und eine Benachrichtigung, die Eintritt in den Suspend-Modus angibt, basierend darauf, dass der Übergang des Zugangspunktes abgeschlossen ist, übertragen wurde.

7. Elektronische Vorrichtung nach Anspruch 1, wobei das Wi-Fi-Modul (310) ferner dazu konfiguriert ist, einen Zugang zu einem Internet-of-Things(IoT-)Server aufrechtzuerhalten, während es in dem Suspend-Modus (803) ist.

8. Elektronische Vorrichtung nach Anspruch 1, die eine drahtlose Client-Vorrichtung ist, die sich innerhalb eines Mesh-Netzwerks (1200) befindet, das durch eine Vielzahl von Zugangspunkten gebildet ist.

9. Betriebsverfahren einer elektronischen Vorrichtung, umfassend ein Wi-Fi-Modul (310), das einen internen Speicher (311), einen Mikrocomputer (320) und einen Prozessor (330) beinhaltet, der dazu konfiguriert ist, zumindest eine Anweisung auszuführen,
wobei das Betriebsverfahren Folgendes umfasst:
Empfangen, durch das Wi-Fi-Modul, einer Basic-Service-Set-, BSS-Übergangsverwaltungs-, BTM-Anforderung Anforderung für Zugangspunktübergang von einem ersten Wi-Fi-Zugangspunkt (601), während der Prozessor in einem Suspend-Modus (801) ist,
wobei der Suspend-Modus einen Arbeitszustand umfasst, in dem Leistung den geringsten Komponenten der elektronischen Vorrichtung, die erforderlich sind, um Kommunikation aufrechtzuerhalten, zugeführt wird;
Speichern, durch das Wi-Fi-Modul, der empfangenen BTM-Anforderung in dem internen Speicher und Erzeugen eines Aufwachsignals;
Übertragen, durch das Wi-Fi-Modul, der BTM-Anforderung, die in dem internen Speicher gespeichert ist, an den Prozessor, nachdem der Prozessor aufwacht, basierend auf dem Aufwachsignal;
Steuern, durch den Prozessor, des Wi-Fi-Moduls, um eine BTM-Antwort entsprechend der BTM-Anforderung an den ersten Wi-Fi-Zugangspunkt zu übertragen; und
Steuern, durch den Prozessor, des Wi-Fi-Moduls, um von dem ersten Wi-Fi-Zugangspunkt zu einem zweiten Wi-Fi-Zugangspunkt (602) überzugehen, wenn die BTM-Antwort an den ersten Wi-Fi-Zugangspunkt übertragen wird.

10. Betriebsverfahren nach Anspruch 9, wobei das Übertragen der gespeicherten BTM-Anforderung an den Prozessor (330) Folgendes umfasst:
Identifizieren, durch das Wi-Fi-Modul (310), ob der Prozessor aufgewacht ist, wenn eine festgelegte Zeitspanne verstrichen ist, nachdem das Aufwachsignal übertragen wird; und
Übertragen der BTM-Anforderung, die in dem internen Speicher (311) gespeichert ist, der in dem WiFi-Modul enthalten ist, an den Prozessor basierend auf einem Ergebnis des Identifizierens.

## Revendications

1. Dispositif électronique comprenant :
un module Wi-Fi (310) comprenant une mémoire interne (311) ;
un micro-ordinateur (320) ; et
un processeur (330) configuré pour exécuter au moins une instruction, dans lequel le module Wi-Fi est configuré pour :
stocker une demande de gestion de transition, BTM, d'ensemble de services de base, BSS, pour une transition de point d'accès dans la mémoire interne et
générer un signal de réveil, sur la base de la réception de la demande BTM reçue à partir d'un premier point d'accès Wi-Fi (601) alors que le processeur est dans un mode suspension (801),
dans lequel le mode suspension comprend un état de fonctionnement dans lequel de l'énergie est fournie aux plus petits composants du dispositif électronique requis pour maintenir une communication ; et
transmettre la demande BTM stockée dans la mémoire interne au processeur après le réveil du processeur sur la base du signal de réveil ;
dans lequel le processeur est configuré pour :
exécuter au moins une instruction pour commander le module Wi-Fi afin de transmettre, au premier point d'accès Wi-Fi, une réponse BTM correspondant à la demande BTM ; et
exécuter au moins une autre instruction pour commander le module Wi-Fi afin de réaliser une transition du premier point d'accès Wi-Fi à un second point d'accès Wi-Fi (602), lorsque la réponse BTM est transmise au premier point d'accès Wi-Fi.

2. Dispositif électronique de la revendication 1, dans lequel le micro-ordinateur (320) est configuré pour recevoir le signal de réveil transmis à partir du module Wi-Fi (310) et transmettre un signal de mise sous tension au processeur (330), sur la base du signal de réveil
dans lequel le processeur est en outre configuré pour exécuter l'au moins une instruction afin de se réveiller sur la base de la réception du signal de mise sous tension.

3. Dispositif électronique de la revendication 1, dans lequel le module Wi-Fi (310) est en outre configuré pour identifier si le processeur (330) s'est réveillé lorsqu'une période de temps définie s'est écoulée après la transmission du signal de réveil, et pour transmettre la demande BTM stockée dans la mémoire interne (311) au processeur, sur la base d'un résultat de l'identification.

4. Dispositif électronique de la revendication 1, dans lequel le module Wi-Fi (310) est en outre configuré pour transmettre la requête BTM stockée dans la mémoire interne (311) au processeur (330), sur la base de la réception d'un signal indiquant que le processeur s'est réveillé.

5. Dispositif électronique de la revendication 1, dans lequel le processeur (330) est en outre configuré pour exécuter l'au moins une instruction afin d'entrer en mode suspension (803) lorsque la transition du point d'accès est terminée.

6. Dispositif électronique de la revendication 5, dans lequel le processeur (330) est en outre configuré pour exécuter l'au moins une instruction afin d'entrer dans le mode suspension (803) après avoir transmis, au module Wi-Fi (310), une commande pour maintenir une connexion avec le second point d'accès (602) et une notification indiquant l'entrée dans le mode suspension, sur la base du fait que la transition du point d'accès est terminée.

7. Dispositif électronique de la revendication 1, dans lequel le module Wi-Fi (310) est en outre configuré pour maintenir un accès à un serveur Internet des objets (loT) pendant le mode suspension (803).

8. Dispositif électronique de la revendication 1, étant un dispositif client sans fil situé à l'intérieur d'un réseau maillé (1200) formé par une pluralité de points d'accès.

9. Procédé de fonctionnement d'un dispositif électronique comprenant un module Wi-Fi (310) comprenant une mémoire interne (311), un micro-ordinateur (320) et un processeur (330) configuré pour exécuter au moins une instruction, le procédé de fonctionnement comprenant :
la réception, par le module Wi-Fi, d'une demande de gestion de transition, BTM, d'ensemble de services de base, BSS, pour une transition de point d'accès à partir d'un premier point d'accès Wi-Fi (601) alors que le processeur est dans un mode suspension (801),
dans lequel le mode suspension comprend un état de fonctionnement dans lequel de l'énergie est fournie aux plus petits composants du dispositif électronique requis pour maintenir une communication ;
le stockage, par le module Wi-Fi, de la demande BTM reçue dans la mémoire interne et la génération d'un signal de réveil ;
la transmission, par le module Wi-Fi, de la demande BTM stockée dans la mémoire interne au processeur après le réveil du processeur sur la base du signal de réveil ;
la commande, par le processeur, du module Wi-Fi pour transmettre une réponse BTM correspondant à la demande BTM au premier point d'accès Wi-Fi ; et
la commande, par le processeur, du module Wi-Fi pour réaliser une transition à partir du premier point d'accès Wi-Fi à un second point d'accès Wi-Fi (602) lorsque la réponse BTM est transmise au premier point d'accès Wi-Fi.

10. Procédé de fonctionnement de la revendication 9, dans lequel la transmission de la requête BTM stockée au processeur (330) comprend :
le fait d'identifier, par le module Wi-Fi (310), si le processeur s'est réveillé lorsqu'une période de temps définie s'est écoulée après la transmission du signal de réveil ; et
la transmission de la requête BTM stockée dans la mémoire interne (311) comprise dans le module Wi-Fi au processeur, sur la base d'un résultat de l'identification.
